# EUROPÄISCHE PATENTSCHRIFT

(11) **EP 2 229 524 B1**
(45) Veröffentlichungstag und Bekanntmachung des Hinweises auf die Patenterteilung: **22.05.2019**
(21) Anmeldenummer: 08864867.0
(22) Anmeldetag: 11.11.2008
(51) Int. Cl.: F02G 5/02, F01K 23/06, F01K 23/10

(54) **VERFAHREN ZUR RÜCKGEWINNUNG EINER VERLUSTWÄRME EINER VERBRENNUNGSKRAFTMASCHINE**
METHOD FOR RECOVERING HEAT DISSIPATED BY AN INTERNAL COMBUSTION ENGINE
PROCÉDÉ DE RÉCUPÉRATION DE PERTES DE CHALEUR D'UN MOTEUR À COMBUSTION INTERNE

(30) Priorität: 22.12.2007 DE 102007062580
(43) Veröffentlichungstag der Anmeldung: 22.09.2010
(73) Patentinhaber: Daimler AG, 70327 Stuttgart (DE)
(72) Erfinder: GÄRTNER, Jan, 71069 Sindelfingen (DE); KOCH, Thomas, 71034 Böblingen (DE); MERCZ, Josef, Martin, verstorben (DE); ZYGAN, Andreas, 76316 Malsch (DE)
(74) Vertreter: JENSEN & SON
(86) Internationale Anmeldenummer: PCT/EP2008/009490
(87) Internationale Veröffentlichungsnummer: WO 2009/080154

(56) Entgegenhaltungen:
- EP-A- 1 333 157
- EP-A- 1 443 183
- DE-A1- 10 221 594
- FR-A- 2 868 809
- JP-A- 2003 278 598
- JP-A- 2005 030 727
- JP-A- 2007 006 684
- US-A1- 2005 132 704

## Beschreibung

Die Erfindung betrifft ein Verfahren zur Rückgewinnung einer Verlustwärme einer Verbrennungskraftmaschine, bei dem ein Arbeitsmedium zunächst in einer Fördereinheit verdichtet wird, anschließend in einem Wärmetauscher durch Wärmeübertragung von einem eine Verlustwärme der Verbrennungskraftmaschine enthaltenden Wärmemedium auf das Arbeitsmedium verdampft wird, nachfolgend in einer Expansionsvorrichtung expandiert wird, wobei der Expansionsvorrichtung eine mechanische Arbeit entnehmbar ist, und anschließend in einem Kondensator kondensiert wird. Die Erfindung betrifft ferner eine Vorrichtung zur Durchführung des Verfahrens mit den Merkmalen des Oberbegriffs des Anspruchs 7.

Heutige Verbrennungskraftmaschinen weisen einen Wirkungsgrad von bis zu 40 Prozent auf. Die Verluste werden dabei überwiegend als Verlustwärme an ein Kühlmittel und an ein Abgas der Verbrennungskraftmaschine abgegeben.

Im Stand der Technik existieren verschiedene Verfahren und Vorrichtungen, mittels derer aus einer Abgaswärme und/oder einer Kühlmittelwärme einer Verbrennungskraftmaschine mechanische und/oder elektrische Energie gewonnen werden.

Aus der EP 1 443 183 A1 ist eine auf einem Clausius-Rankine-Kreisprozesses beruhende Wärmerückgewinnungsvorrichtung bekannt, mit welcher Energie aus einer Abgaswärme einer Verbrennungskraftmaschine gewonnen werden kann. Die Wärmerückgewinnungsvorrichtung umfasst eine Fördereinheit, einen Wärmetauscher, eine Expansionsvorrichtung und einen Kondensator, die in einem Kreislauf verschaltet sind und in denen ein Arbeitsmedium führbar ist. Ferner sind Mittel vorgesehen, mit denen sich eine Temperatur des Arbeitsmediums nach dem Wärmetauscher in Abhängigkeit von einer Temperatur des Arbeitsmediums vor dem Wärmetauscher und von einem Massenstrom des Arbeitsmediums einstellen lässt. Weiterhin umfasst die Vorrichtung Mittel zur Einstellung eines Drucks des Arbeitsmediums vor Eintritt in die Expansionsvorrichtung in Abhängigkeit von der Temperatur des Arbeitsmediums nach dem Wärmetauscher.

Ferner ist aus "T. Endo, S. Kawajiri, Y. Kojima, u. a. (Honda R&D Co., Ltd.): Study on Maximizing Exergy in Automotive Engines; in SAE TECHNICAL PAPER SERIES 2007-01-0257; 2007 World Congress, Detroit Michigan, April 16-19, 2007" eine Wärmerückgewinnungsvorrichtung bekannt, die ebenfalls nach dem Clausius-Rankine-Prinzip betreibbar ist. Die Vorrichtung umfasst eine Fördereinheit, einen Wärmetauscher, eine Expansionsvorrichtung und einen Kondensator, die in einem Kreislauf verschaltet sind und von einem Arbeitsmedium durchströmt sind. Die Vorrichtung beinhaltet ferner eine Regeleinheit, mit deren Hilfe eine Temperatur des Arbeitsmediums nach dem Wärmetauscher auf einen festgelegten Zielwert einregelbar ist. Als Stellgröße dient dabei eine Drehzahl der Fördereinheit beziehungsweise ein Massenstrom des Arbeitsmediums durch den Wärmetauscher. Weiterhin ist mit Hilfe einer weiteren Regeleinheit ein Druck des Arbeitsmediums vor der Expansionsvorrichtung auf einen festgelegten Zielwert einregelbar, wobei als Stellgröße eine Drehzahl der Expansionsvorrichtung vorgesehen ist.

Weitere Vorrichtungen und Verfahren zur Wärmerückgewinnung sind aus der FR 2 868 809 B1, EP 1 333 157 A1, DE 102 21 594 A1, US 2005/0132704 A1, JP 2007 006 684 A, JP 2003 278 598 A und JP 2005 030 727 A bekannt.

Der Erfindung liegt die Aufgabe zugrunde, ein Verfahren zur Rückgewinnung einer Verlustwärme einer Verbrennungskraftmaschine anzugeben, das sich durch einen optimalen Wirkungsgrad bei unterschiedlichen Betriebsbedingungen der Verbrennungskraftmaschine auszeichnet. Der Erfindung liegt weiterhin die Aufgabe zugrunde, eine Verbrennungskraftmaschine mit einer Wärmerückgewinnungsvorrichtung zur Durchführung des Verfahrens bereitzustellen.

Die erste Aufgabe wird durch ein Verfahren mit den Merkmalen des Anspruchs 1 gelöst. Die zweite Aufgabe wird durch eine Verbrennungskraftmaschine mit den Merkmalen des Anspruchs 6 gelöst.

Vorteilhafte Ausgestaltungen der Erfindung sind Gegenstand der Unteransprüche.

Bei dem erfindungsgemäßen Verfahren zur Rückgewinnung einer Verlustwärme einer Verbrennungskraftmaschine wird ein oberer Prozessdruck in einem Betriebsbereich der Verbrennungskraftmaschine derart eingestellt, dass das Arbeitsmedium in der Expansionsvorrichtung zumindest annähernd bis an eine Sattdampfgrenze expandiert wird. Eine Sattdampfgrenze ist dadurch charakterisiert, dass das Arbeitsmedium "gerade noch" in gasförmiger Phase vorliegt; eine geringe Enthalpiereduzierung (beispielsweise in Form einer Temperaturreduzierung bei konstantem Druck) würde zu einem Phasenübergang eines Teils des Arbeitsmediums von einer gasförmigen Phase in eine flüssige Phase führen. Durch das Verfahren ist sichergestellt, dass das Arbeitsmedium in der Expansionsvorrichtung unter verschiedenen Betriebsbedingungen jeweils von einem möglichst hohen oberen Prozessdruck auf einen möglichst niedrigen unteren Prozessdruck expandiert wird. Darüber hinaus zeichnet sich das Verfahren dadurch aus, dass bei unterschiedlichen Betriebsbedingungen jeweils ein vergleichsweise großer Teil der in dem Arbeitsmedium enthaltenen Energie in mechanische Arbeit umgesetzt und nur ein geringer Teil in dem Kondensator als Kühlwärme abgeführt wird, so dass sich insgesamt ein verbesserter Wirkungsgrad ergibt. Ein weiterer Vorteil des Verfahrens besteht in einer verbesserten Betriebssicherheit, da in der Expansionsvorrichtung bei unterschiedlichen oder allen Betriebsbedingungen allenfalls eine geringe Kondensation des Arbeitsmediums vorgesehen ist. Die Gefahr einer Beschädigung der Expansionsvorrichtung infolge einer zu starken Kondensation des Arbeitsmediums ist somit verringert.

Weiterhin wird ein unterer Prozessdruck in einer Regelung mittels einer zweiten Steuereinheit anhand einer Einstellung einer Last der Expansionsvorrichtung gemäß einer Sollvorgabe in einem Betriebsbereich der Verbrennungskraftmaschine innerhalb eines vorgebbaren Druckbereichs eingestellt. Auf diese Weise ist es möglich, den unteren Prozessdruck und den oberen Prozessdruck unabhängig voneinander einzustellen. Insbesondere ist der untere Prozessdruck an einen optimalen Betriebsbereich des Kondensators anpassbar. Der untere Prozessdruck kann beispielsweise derart eingestellt werden, dass der Kondensator bei einem weitgehend konstanten Kondensationsdruck betrieben wird, auf den er ausgelegt ist. Der untere Prozessdruck kann insbesondere auch bei einer Änderung des oberen Prozessdrucks weitgehend konstant gehalten werden.

In einer Ausgestaltung des Verfahrens wird der obere Prozessdruck durch Anpassung einer Förderleistung der Fördereinheit in einem Betriebsbereich der Verbrennungskraftmaschine eingestellt. Damit ist es auf einfache Art und Weise möglich, einen Massenstrom des Arbeitsmediums durch den Wärmetauscher und damit ein Verhältnis zwischen dem oberen Prozessdruck und dem unteren Prozessdruck zu beeinflussen.

In einer weiteren Ausgestaltung des Verfahrens wird das Arbeitsmedium in der Expansionsvorrichtung in einem Betriebsbereich der Verbrennungskraftmaschine bis in ein Nassdampfgebiet expandiert. Dadurch ist es möglich, bei einer in etwa gleich bleibenden maximalen Prozesstemperatur des Arbeitsmediums (nach Durchströmen des Wärmetauschers) den oberen Prozessdruck mit Hilfe der Fördereinheit weiter zu erhöhen und auf diese Weise einen Wirkungsgrad des Verfahrens weiter zu verbessern. Die Expansion des Arbeitsmediums in der Expansionsvorrichtung erfolgt dabei bevorzugt nur leicht über die Sattdampfgrenze hinweg, um Beschädigungen an der Expansionsvorrichtung durch übermäßige Kondensation des Arbeitsmediums zu vermeiden.

In einer weiteren Ausgestaltung des Verfahrens wird ein Massenstrom des Arbeitsmediums mittels der Expansionsvorrichtung geregelt und/oder gesteuert. Damit ist neben der Anpassung der Förderleistung der Fördereinheit eine weitere Möglichkeit gegeben, einen Massenstrom des Arbeitsmediums und damit verbunden den oberen Prozessdruck zu beeinflussen. Darüber hinaus ist es mit Hilfe der Expansionsvorrichtung und der Fördereinheit möglich, den unteren Prozessdruck und den oberen Prozessdruck unabhängig voneinander einzustellen.

In einer weiteren Ausgestaltung der Erfindung wird ein Massenstrom des Arbeitsmediums durch Regelung und/oder Steuerung einer Leistung der Expansionsvorrichtung eingestellt. Dies kann zum Beispiel durch eine Variation einer Last der Expansionsvorrichtung erfolgen.

Bei einer erfindungsgemäßen Verbrennungskraftmaschine mit Wärmerückgewinnungsvorrichtung sind Mittel zur Regelung des oberen Prozessdruckes in Abhängigkeit von einem Betriebszustand der Verbrennungskraftmaschine vorgesehen. Der obere Prozessdruck ist dabei insbesondere derart einstellbar, dass das Arbeitsmedium in der Expansionsvorrichtung zumindest annähernd bis an eine Sattdampfgrenze expandierbar ist. Auf diese Weise ist ein wirkungsgradoptimaler Betrieb unter unterschiedlichen Betriebsbedingungen gewährleistet.

Weiterhin sind Mittel zur Regelung des unteren Prozessdruckes in Abhängigkeit von einem Betriebszustand der Verbrennungskraftmaschine vorgesehen. Damit ist es möglich, den oberen Prozessdruck und den unteren Prozessdruck unabhängig voneinander einzustellen, woraus sich eine weitere Wirkungsgradverbesserung in einem weiten Betriebsbereich der Verbrennungskraftmaschine ergibt.

Die Mittel zur Regelung des unteren Prozessdruckes umfassen eine zweite Steuereinheit, mit deren Hilfe eine Last der Expansionsvorrichtung einstellbar ist. Durch eine Variation der Last ist insbesondere ein Massenstrom des Arbeitsmediums durch die Expansionsvorrichtung beeinflussbar. Insbesondere ist auf diese Art und Weise auch ein unterer Prozessdruck einstellbar.

Dabei ist mit Hilfe der Mittel zur Regelung des unteren Prozessdruckes der untere Prozessdruck gemäß einer Sollvorgabe einstellbar. Insbesondere kann die Sollvorgabe derart gewählt sein, dass dem Kondensator das Arbeitsmedium unter einem definierten Druck zugeführt wird.

In einer Ausgestaltung der Erfindung ist der obere Prozessdruck in Abhängigkeit von einem Sollwert für den unteren Prozessdruck und in Abhängigkeit von einer dritten Temperatur des Arbeitsmediums stromabwärts des Wärmetauschers einstellbar. Der obere Prozessdruck kann beispielsweise als Kennfeld in einem Steuergerät hinterlegt sein oder über ein mathematisches und/oder empirisches Modell aus den genannten Prozessgrößen berechnet werden. Der obere Prozessdruck ist bevorzugt so festgelegt, dass das Arbeitsmedium in der Expansionsvorrichtung zumindest annähernd bis an eine Sattdampfgrenze heran expandierbar ist.

In einer weiteren Ausgestaltung der Erfindung umfassen die Mittel zur Regelung des oberen Prozessdruckes eine erste Steuereinheit und Sensoren zur Erfassung eines Betriebszustandes der Verbrennungskraftmaschine, insbesondere Sensoren zur Erfassung eines Lastzustandes der Verbrennungskraftmaschine. Die erste Steuereinheit und die zweite Steuereinheit können dabei auch zu einer gemeinsamen Einheit zusammengefasst sein.

In einer weiteren Ausgestaltung der Erfindung ist über die erste Steuereinheit ein Massenstrom des Arbeitsmediums mit Hilfe der Fördereinheit in Abhängigkeit von Messgrößen der Sensoren zur Erfassung des Betriebszustands einstellbar. Dadurch ist es auf einfache Art und Weise möglich, den oberen Prozessdruck mit Hilfe der Fördereinheit an einen Betriebszustand der Verbrennungskraftmaschine anzupassen.

In weiteren Ausgestaltungen der Erfindung ist ein Sensor als Temperatursensor zur Erfassung der dritten Temperatur des Arbeitsmediums stromabwärts des Wärmetauschers ausgeführt. Zusätzlich kann ein weiterer Sensor als Drucksensor zur Erfassung des oberen Prozessdruckes ausgeführt und stromabwärts des Wärmetauschers angeordnet sein. Damit stehen Messgrößen zur Verfügung, die eine wirkungsgradoptimale Festlegung des oberen Prozessdrucks ermöglicht.

In weiteren Ausgestaltungen der Erfindung ist die Expansionsvorrichtung als Turbine und/oder als Kolbenexpansionsmaschine ausgeführt und mit einem Generator und/oder einem elektrischen Motor und/oder einer Motor/Generatoreinheit gekoppelt. Die der Expansionsvorrichtung entnehmbare mechanische Arbeit ist damit entweder direkt zur Unterstützung der Verbrennungskraftmaschine einsetzbar oder über den Generator in elektrische Energie umwandelbar.

In einer weiteren Ausgestaltung der Erfindung ist mittels des Generators und/oder des elektrischen Motors und/oder der Motor/Generatoreinheit eine Last der Expansionsvorrichtung einstellbar. Damit ist auch ein Massenstrom des Arbeitsmediums durch die Expansionsvorrichtung leicht beeinflussbar.

Zusammenfassend ermöglichen das erfindungsgemäße Verfahren zur Rückgewinnung der Verlustwärme und die erfindungsgemäße Verbrennungskraftmaschine mit Wärmerückgewinnungsvorrichtung einen verbesserten Betrieb des Clausius-Rankine-Kreisprozesses über einen großen Arbeitsbereich. Neben einer optimalen Leistung anhand einer Steigerung des Gesamtwirkungsgrades wird weiterhin eine Verringerung der an eine Umgebung abzuführenden Kühlwärme erzielt. Durch den geringen zusätzlichen Material- und Herstellungsaufwand sind das erfindungsgemäße Verfahren und die erfindungsgemäße Verbrennungskraftmaschine einfach und kostengünstig realisierbar.

Ausführungsbeispiele der Erfindung werden im Folgenden anhand von Zeichnungen näher erläutert.

Dabei zeigen:
- Fig. 1: Druck-Enthalpie-Diagramme von drei Clausius-Rankine-Kreisprozessen mit jeweils unterschiedlichen oberen Prozessdrücken und
- Fig. 2: schematisch ein Schaltbild einer erfindungsgemäßen Verbrennungskraftmaschine mit Wärmerückgewinnungsvorrichtung.

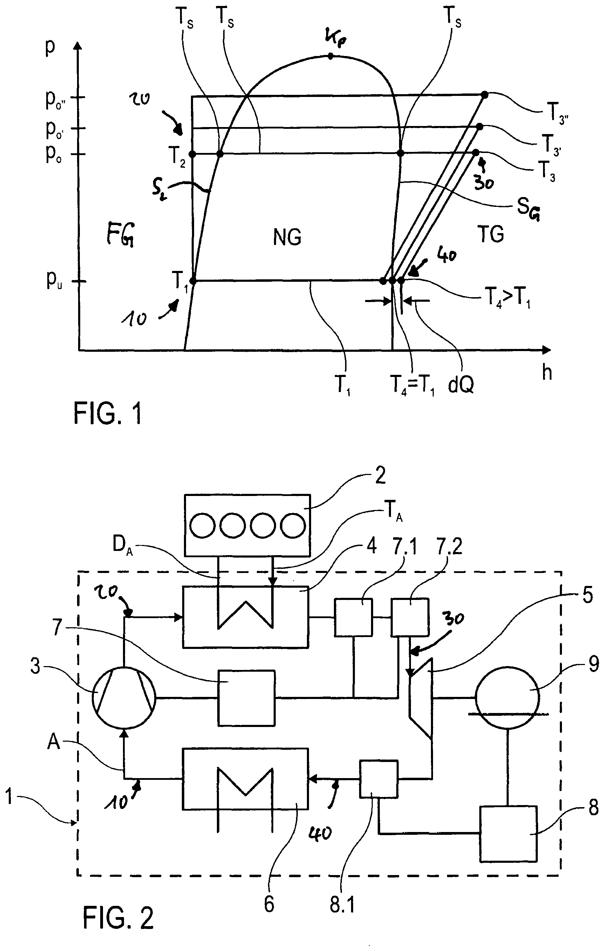

Im Folgenden wird zunächst anhand von Fig. 2 eine erfindungsgemäße Verbrennungskraftmaschine 2 mit Wärmerückgewinnungsvorrichtung 1 beschrieben.

In der Wärmerückgewinnungsvorrichtung 1 sind eine Fördereinheit in Form einer Pumpe 3, ein Wärmetauscher 4, eine Expansionsvorrichtung in Form einer Turbine 5 und ein Kondensator 6 in einem Kreislauf verschaltet. In dem Kreislauf ist ein Arbeitsmedium A in Form von Wasser in der durch die Pfeile angedeuteten Richtung führbar. Die Wärmerückgewinnungsvorrichtung ist zur Durchführung eines so genannten Clausius-Rankine-Kreisprozesses geeignet. In einem modifizierten Ausführungsbeispiel ist als Arbeitsmedium auch ein organisches Medium, zum Beispiel Ethanol oder n-Butan einsetzbar.

Vor Eintritt in die Pumpe 3 liegt das Arbeitsmedium A in flüssiger Phase vor. Es weist eine erste, vergleichsweise niedrige Temperatur T₁ auf, die bevorzugt zwischen 60°C und 90°C beträgt. Der Druck, den das Arbeitsmedium vor Eintritt in die Pumpe 3 aufweist, entspricht dem unteren Prozessdruck pᵤ und beträgt typischerweise zwischen einem und zwei bar. In der Pumpe 3 ist das flüssige Arbeitsmedium annähernd adiabat und isentrop auf einen oberen Prozessdruck pₒ, beispielsweise 90 bar, verdichtbar. Nach der Verdichtung weist das Arbeitsmedium eine zweite Temperatur T₂ auf, die zumindest annähernd der ersten Temperatur T₁ entspricht, beziehungsweise diese (je nach verwendetem Arbeitsmedium und Betriebszustand) zwischen 0,1 K und 10 K überschreitet.

Anschließend ist das Arbeitsmedium A dem Wärmetauscher 4 zuführbar. In dem Wärmetauscher 4 ist ein Wärmeübergang von einem Abgas der Verbrennungskraftmaschine 2 zum Arbeitsmedium A realisierbar. Der Wärmeübergang erfolgt dabei weitgehend isobar. Beim Durchströmen des Wärmetauschers 4 wird das Arbeitsmedium A zunächst in der flüssigen Phase weitgehend isobar auf eine Siedetemperatur Tₛ erwärmt und anschließend isobar und isotherm verdampft. Der gasförmige Anteil des Arbeitsmediums nimmt während der Verdampfung kontinuierlich zu, bis das Arbeitsmedium A vollständig in gasförmiger Phase vorliegt. Anschließend wird das gasförmige Arbeitsmedium im Wärmetauscher weitgehend isobar auf eine dritte Temperatur T₃ überhitzt, die bevorzugt zwischen 400°C und 500°C beträgt.

Nach Durchströmen des Wärmetauschers 4 ist das gasförmige Arbeitsmedium A der Turbine 5 zuführbar, in der es sich im wesentlichen adiabat zumindest annähernd auf den unteren Prozessdruck pᵤ expandieren lässt. Dabei ist der Turbine 5 an einer Welle eine mechanische Arbeit entnehmbar. Während der Expansion wird das Arbeitsmedium auf eine vierte Temperatur T₄ abgekühlt. In der Turbine 5 kann eine geringe Kondensation des Arbeitsmediums A vorgesehen sein.

Die Turbine 5 ist mit einer Motor-/Generatoreinheit 9 gekoppelt, in der die der Turbine 5 entnehmbare mechanische Arbeit in elektrische Energie umwandelbar ist, die wiederum in einem nicht dargestellten elektrischen Speicher speicherbar ist.

Anschließend ist das Arbeitsmedium A einem Kondensator 6 zuführbar, in dem eine Wärmeübertragung von dem Arbeitsmedium auf ein Kühlmedium vorgesehen ist. Dadurch lässt sich das Arbeitsmedium beim Durchströmen des Kondensators 6 von einer gasförmigen Phase in eine flüssige Phase überführen (Kondensation). Nachfolgend ist das Arbeitsmedium zur Pumpe 3 führbar, so dass ein Kreislauf geschlossen ist.

In einem modifizierten Ausführungsbeispiel ist der Kondensator 6 mit einem Kühlkreislauf der Verbrennungskraftmaschine gekoppelt, so dass die Kühlung des Arbeitsmediums A durch einen Wärmeübergang von dem Arbeitsmedium A auf ein Kühlmittel der Verbrennungskraftmaschine realisierbar ist.

Die Wärmerückgewinnungsvorrichtung 1 umfasst ferner eine erste Steuereinheit 7, einen Temperatursensor 7.1 zur Erfassung einer dritten Temperatur T₃ des Arbeitsmediums A nach dem Wärmetauscher und einen ersten Drucksensor 7.2 zur Erfassung eines oberen Prozessdruckes pₒ. Die erste Steuereinheit 7 ist über eine Leitung mit der Pumpe 3 verbunden. Über die Steuereinheit 7 ist eine Förderleistung der Pumpe 3 in Abhängigkeit von den Messwerten des Temperatursensors 7.1 und/oder des ersten Drucksensors 7.2 einstellbar. Auf diese Weise sind ein Massenstrom des Arbeitsmediums A durch die Pumpe 3 und ein Druckverhältnis zwischen dem oberen Prozessdruck pₒ und dem unteren Prozessdruck pᵤ in Abhängigkeit von den genannten Messgrößen beeinflussbar. In einem modifizierten, nicht dargestellten Ausführungsbeispiel sind weitere Messgrößen der Verbrennungskraftmaschine und/oder der Wärmerückgewinnungsvorrichtung als Eingangsgrößen für die erste Steuereinheit 7 zur Ermittlung einer Soll-Förderleistung der Pumpe 3 vorgesehen. Denkbare Messgrößen sind zum Beispiel eine Drehzahl der Verbrennungskraftmaschine, eine Abgastemperatur Tₐ und ein Abgasmassenstrom Dₐ.

Mit Hilfe einer zweiten Steuereinheit 8 und eines zweiten Drucksensors 8.1 zur Erfassung eines unteren Prozessdrucks pᵤ nach der Turbine 5 ist eine Last des Generators in Abhängigkeit von dem unteren Prozessdruck pᵤ einstellbar. Auf diese Weise ist ein Massenstrom des Arbeitsmediums A durch die Turbine 5 beeinflussbar. Neben der Einstellung der Förderleistung der Pumpe 3 ist damit eine zweite Stellgröße gegeben, um ein Druckverhältnis zwischen dem oberen Prozessdruck pₒ und dem unteren Prozessdruck pᵤ sowie auch die Absolutwerte der beiden Prozessdrücke zu beeinflussen. In einem modifizierten, nicht dargestellten Ausführungsbeispiel sind weitere Messgrößen der Verbrennungskraftmaschine und/oder der Wärmerückgewinnungsvorrichtung als Eingangsgrößen für die zweite Steuereinheit 8 zur Ermittlung einer Last der Motor-/ Generatoreinheit 9 vorgesehen. Denkbare Messgrößen sind zum Beispiel eine Drehzahl der Verbrennungskraftmaschine, eine Abgastemperatur und ein Abgasmassenstrom.

In einem weiteren, modifizierten Ausführungsbeispiel sind die erste Steuereinheit und die zweite Steuereinheit zu einer Steuereinheit zusammengefasst. Dabei können in der Steuereinheit insbesondere Sollwerte für die Last der Motor-/ Generatoreinheit und die Förderleistung der Pumpe in Abhängigkeit von den Messwerten des ersten Temperatursensors, des ersten Drucksensors und des zweiten Drucksensors sowie gegebenenfalls weiterer Sensoren festgelegt werden.

Der mit Hilfe der erfindungsgemäßen Verbrennungskraftmaschine durchführbare Kreisprozess zur Rückgewinnung einer Verlustwärme wird nachfolgend anhand von Fig. 1 beschrieben.

In Fig. 1 ist schematisch ein Druck-Enthalpie-Diagramm des Arbeitsmediums gezeigt. In dem Diagramm ist eine Grenzlinie S_{L}, S_{G} dargestellt, durch die Bereiche abgegrenzt sind, in denen das Arbeitsmedium in unterschiedlichen Phasen vorliegt. Die Grenzlinie lässt sich in eine Siedeline S_{L} und eine Sattdampfgrenze S_{G} unterteilen, die an einem kritischen Punkt Kₚ ineinander übergehen. Die Siedelinie S_{L} und die Sattdampfgrenze S_{G} begrenzen gemeinsam ein so genanntes Nassdampfgebiet NG, in dem das Arbeitsmedium sowohl in einer flüssigen Phase als auch in einer gasförmigen Phase vorliegt. Bei einer Enthalpieverringerung (beispielsweise durch eine Temperaturreduzierung bei konstantem Druck) bis unter die Siedelinie S_{L} ist das Arbeitsmedium vollständig in die flüssige Phase übergetreten; der Bereich des Druck-Enhalpie-Diagramms, der durch die Ordinate und die Siedelinie begrenzt ist, wird demzufolge auch als Flüssigkeitsgebiet FG bezeichnet. Eine Enthalpieerhöhung bis über die Sattdampfgrenze S_{G} hinweg führt dagegen zu einem vollständigen Phasenwechsel in die gasförmige Phase, und der entsprechende Bereich des Druck-Enthalpie-Diagramms wird als so genanntes Trockendampfgebiet TG bezeichnet.

Weiterhin ist in Fig. 1 ein Kreisprozess zur Rückgewinnung einer Verlustwärme in idealisierter Form ohne Reibungs- oder Wärmeverluste dargestellt.

Vor Eintritt in die Pumpe 3 befindet sich das Arbeitsmedium A in einem ersten Zustand 10, in dem es eine erste Temperatur T₁, einen unteren Prozessdruck Pᵤ sowie eine erste Enthalpie h₁ aufweist. In dem ersten Zustand 10 liegt das Arbeitsmedium in flüssiger Phase vor. Ein Punkt im Druck-Enthalpie-Diagramm (Fig. 1), der dem ersten Zustand entspricht, befindet sich auf der oder in unmittelbarer Nähe zur Siedelinie S_{L}.

In der Pumpe 3 wird das Arbeitsmedium A annähernd adiabat verdichtet und in einen zweiten Zustand 20 überführt. Der zweite Zustand 20 ist durch eine zweite Temperatur T₂, den oberen Prozessdruck pₒ und die erste Enthalpie h₁ charakterisiert. Der Punkt im Druck-Enthalpie-Diagramm, der dem zweiten Zustand 20 entspricht, ist weiter von der Siedelinie entfernt, das heißt das Arbeitsmedium liegt weiterhin in flüssiger Phase vor.

In dem Wärmetauscher 4 wird dem Arbeitsmedium A isobar Wärme zugeführt und damit seine Enthalpie h vergrößert. Das zunächst noch flüssige Arbeitsmedium wird dabei zunächst bis zu einer Siedetemperatur Tₛ, das heißt bis an die Siedelinie SL erwärmt. An der Siedelinie S_{L} beginnt ein Phasenübergang von der flüssigen Phase in die gasförmige Phase. Im Verlauf der weiteren Durchströmung des Wärmetauschers nimmt der gasförmige Anteil des Arbeitsmediums zu, bis das Arbeitsmedium vollständig verdampft ist. Der Druck pₒ und die Temperatur Tₛ des Arbeitsmediums bleiben dabei im Nassdampfgebiet konstant, und die Wärmeenergie, die im Wärmetauscher von dem Abgas zum Arbeitsmedium im Nassdampfgebiet übertragen wird, bewirkt in erster Linie den Phasenwechsel von flüssig zu gasförmig. Im weiteren Verlauf der Durchströmung des Wärmetauschers wird das nun gasförmige Arbeitsmedium A durch eine Wärmeübertragung von dem Abgas isobar überhitzt, bis es am Austritt des Wärmetauschers einen dritten Zustand 30 angenommen hat, der durch eine dritte Temperatur T₃, den oberen Prozessdruck pₒ und eine dritte Enthalpie h₃ charakterisisert ist.

In der Turbine wird das Arbeitsmedium A auf den unteren Prozessdruck pᵤ expandiert, so dass die Enthalpie des Arbeitsmediums nach der Expansion verringert ist. Das Arbeitsmedium A befindet sich dann in einem vierten Zustand 40, der durch eine vierte Temperatur T₄, den unteren Prozessdruck pᵤ sowie eine vierte Enthalpie h₄ charakterisiert ist. Die Expansion erfolgt dabei erfindungsgemäß bis in die Nähe der Sattdampfgrenze S_{G}.

In dem Kondensator wird dem Arbeitsmedium durch einen Wärmeübergang von dem Arbeitsmedium auf ein Kühlmedium Wärmeenergie entzogen, wodurch sich die Enthalpie des Arbeitsmediums verringert. Wenn das Arbeitsmedium A in der Turbine nicht bis zur Sattdampfgrenze S_{G}, sondern bis in das Trockendampfgebiet TG expandiert wird, wird im Kondensator das noch gasförmige Arbeitsmedium A zunächst durch Entzug einer Wärmemenge dQ isobar von der vierten Temperatur T₄ auf die erste Temperatur T₁, das heißt bis an die Sattdampfgrenze S_{G}, abgekühlt. An der Sattdampfgrenze S_{G} beginnt ein Phasenwechsel von der gasförmigen Phase in die flüssige Phase. Im Verlauf der weiteren Durchströmung des Kondensators nimmt der gasförmige Anteil des Arbeitsmediums ab, bis das Arbeitsmedium vollständig verflüssigt ist. Der Druck pᵤ und die Temperatur T₁ des Arbeitsmediums bleiben dabei im Nassdampfgebiet konstant, und die Wärmeenergie, die im Kondensator von dem Arbeitsmedium zum Kühlmittel beim "Durchlaufen" des Nassdampfgebiets übertragen wird, bewirkt in erster Linie den Phasenwechsel von gasförmig zu flüssig. Dem Arbeitsmedium wird im Kondensator so viel Wärme entzogen, dass es am Austritt des Wärmetauschers vollständig kondensiert ist und wieder im ersten Zustand 10 vorliegt.

Aus Fig. 1 wird der Einfluss einer Erhöhung des oberen Prozessdrucks pₒ auf den Prozessverlauf deutlich. Eine Steigerung von pₒ auf einen ersten erhöhten Druck p_{o'} bewirkt, dass das Arbeitsmedium in der Turbine bei einem gleich bleibenden unteren Prozessdruck pᵤ bis auf die Sattdampfgrenze S_{G} expandiert wird. Eine weitere Steigerung auf einen zweiten erhöhten Druck p_{o"} führt dazu, dass das Arbeitsmedium in der Turbine bis in das Nassdampfgebiet NG expandiert wird, was bedeutet, dass das Arbeitsmedium A in der Turbine teilweise kondensiert.

Die vorliegende Erfindung ermöglicht es, durch Variation der Förderleistung der Pumpe 3 und der Last der Turbine 5 einen oberen Prozessdruck und einen unteren Prozessdruck unabhängig voneinander einzustellen und darüber hinaus an einen Betriebszustand der Verbrennungskraftmaschine anzupassen. Die erfindungsgemäße Verbrennungskraftmaschine mit Wärmerückgewinnungsvorrichtung ermöglicht insbesondere, einen oberen Prozessdruck pₒ in Abhängigkeit von dem Betriebszustand zu variieren und den unteren Prozessdruck dabei weitgehend konstant zu halten. Dadurch ist ein optimaler Betrieb der Wärmerückgewinnungsvorrichtung in einem weiten Betriebbereich der Verbrennungskraftmaschine (Teillast, Volllast, ...) gewährleistet. Die Prozessdrücke können insbesondere so eingestellt werden, dass das Arbeitsmedium in der Turbine unter verschiedenen Betriebsbedingungen jeweils bis an eine Sattdampfgrenze oder sogar leicht in ein Nassdampfgebiet expandiert wird. Im Volllastbetrieb kann dabei je nach verwendetem Arbeitsmedium ein oberer Prozessdruck von 90 bar oder mehr thermodynamisch zielführend sein. Auf diese Weise ist gewährleistet, dass unter verschiedenen Betriebsbedingungen jeweils ein großer Enthalpieanteil des Arbeitsmediums in mechanische Arbeit überführbar ist, und ein über den Kondensator als Kühlwärme nach extern abzuführender Enthalpieanteil ist verringert. Eine Anhebung des oberen Prozessdrucks pₒ von beispielsweise 10 bar auf 90 bar führt zu einer Reduzierung der in dem Kondensator abzuführenden Kühlwärme um ca. 10%. Darüber hinaus ist durch die Expansion bis zur Nassdampfgrenze auch der Bauraumbedarf für den Kondensator reduziert, da große Kühlerflächen zur Abkühlung des heißen Arbeitsmediums im Trockendampfgebiet entfallen können.

Die Regelung des unteren Prozessdrucks pₒ ermöglicht darüber hinaus, dass das Arbeitsmedium nach Durchströmen des Kondensators bei verschiedenen Betriebszuständen jeweils zumindest annähernd in vollständig flüssiger Phase der Pumpe 3 zuführbar ist. Dadurch ist die Gefahr eines Pumpenschadens infolge eines dampfförmig zugeführten Arbeitsmediums verringert.

Das erfindungsgemäße Verfahren ermöglicht insbesondere, ein optimales Verhältnis aus oberem und unterem Prozessdruck einzustellen. Dazu wird zumindest in einem weiten Betriebsbereich oder im gesamten Betriebsbereich der Verbrennungskraftmaschine der obere Prozessdruck und/oder der untere Prozessdruck so an die jeweils vorherrschenden Betriebsbedingungen angepasst, dass sich unter allen Betriebszuständen ein möglichst großes Verhältnis zwischen dem oberem Prozessdruck und dem unteren Prozessdruck ergibt. Auf diese Weise ist ein guter Prozesswirkungsgrad im Betriebsbereich erzielbar. Unter der Annahme, dass eine Expansion in der Expansionsvorrichtung bis an die Sattdampfgrenze oder allenfalls geringfügig in das Nassdampfgebiet erfolgt, ist das erzielbare Druckverhältnis abhängig von der Temperatur und dem Massenstrom des Wärmemediums (und damit von dem Wärmefluss zum Arbeitsmedium) und von den Eigenschaften des verwendeten Arbeitsmediums (insbesondere vom Siedepunkt und vom Verhalten des Arbeitsmediums im überkritischen Bereich). Das Druckverhältnis ist begrenzt durch die mechanische Belastbarkeit der Bauteile, insbesondere des Wärmetauschers und der Expansionsvorrichtung.

Das erfindungsgemäße Verfahren zeichnet sich durch einen deutlich verbesserten Wirkungsgrad gegenüber bestehenden Verfahren aus. Die Vorrichtung und das Verfahren sind insbesondere zum Einsatz in einem Hybridfahrzeug geeignet, da in diesem Fall eine Motor-/Generatoreinheit bereits vorhanden ist, die mit der Turbine koppelbar ist.

## Patentansprüche

1. Verfahren zur Rückgewinnung einer Verlustwärme einer Verbrennungskraftmaschine (2), mit den folgenden Arbeitsschritten:
- Verdichtung eines flüssigen Arbeitsmediums (A) mittels einer Fördereinheit (3) von einem unteren Prozessdruck (pᵤ) und einer ersten Temperatur (T₁) auf einen oberen Prozessdruck (pₒ) und eine zweite Temperatur (T₂);
- Verdampfung des Arbeitsmediums in einem Wärmetauscher (4) durch Wärmeübertragung von einem eine Verlustwärme der Verbrennungskraftmaschine (2) enthaltenden Wärmemedium auf das Arbeitsmedium (A), wobei das Arbeitsmedium (A) nach Durchströmen des Wärmetauschers (4) eine dritte Temperatur (T₃) aufweist;
- Expansion des Arbeitsmediums (A) zumindest annähernd auf den unteren Prozessdruck (pᵤ) und auf eine vierte Temperatur (T₄) in einer Expansionsvorrichtung (5), wobei der Expansionsvorrichtung eine mechanische Arbeit entnehmbar ist;
- Kondensation des Arbeitsmediums (A) in einem Kondensator (6) und
- Weiterleitung des Arbeitsmediums (A) zur Fördereinheit (3),
wobei
- der obere Prozessdruck (pₒ) in einem Betriebsbereich der Verbrennungskraftmaschine (2) derart eingestellt wird, dass das Arbeitsmedium (A) in der Expansionsvorrichtung (5) zumindest annähernd bis an eine Sattdampfgrenze (SG) expandiert wird, **dadurch gekennzeichnet, dass**
- der untere Prozessdruck (pᵤ) in einer Regelung mittels einer zweiten Steuereinheit (8) anhand einer Einstellung einer Last der Expansionsvorrichtung (5) gemäß einer Sollvorgabe in einem Betriebsbereich der Verbrennungskraftmaschine (2) innerhalb eines vorgebbaren Druckbereichs eingestellt wird.

2. Verfahren nach Anspruch 1,
**dadurch gekennzeichnet, dass**
der obere Prozessdruck (pₒ) durch Anpassung einer Förderleistung der Fördereinheit (3) in einem Betriebsbereich der Verbrennungskraftmaschine (2) eingestellt wird.

3. Verfahren nach Anspruch 1 oder 2,
**dadurch gekennzeichnet, dass**
das Arbeitsmedium (A) in der Expansionsvorrichtung (5) in einem Betriebsbereich der Verbrennungskraftmaschine (2) bis in ein Nassdampfgebiet (NG) expandiert wird.

4. Verfahren nach einem der Ansprüche 1 bis 3,
**dadurch gekennzeichnet, dass**
ein Massenstrom des Arbeitsmediums (A) mittels der Expansionsvorrichtung (5) geregelt und/oder gesteuert wird.

5. Verfahren nach Anspruch 4,
**dadurch gekennzeichnet, dass**
ein Massenstrom des Arbeitsmediums durch Regelung und/oder Steuerung einer Leistung der Expansionsvorrichtung (5) eingestellt wird.

6. Verbrennungskraftmaschine (2) mit einer Wärmerückgewinnungsvorrichtung (1), umfassend
- eine Fördereinheit (3) zur Verdichtung eines zumindest weitgehend flüssigen Arbeitsmediums (A) von einem unteren Prozessdruck (pᵤ) und einer ersten Temperatur (T₁) auf einen oberen Prozessdruck (pₒ) und eine zweite Temperatur (T₂),
- einen Wärmetauscher (4) zur Verdampfung des Arbeitsmediums (A) durch einen Wärmeübergang von einem Wärmemedium (M) auf das Arbeitsmedium (A), so dass das Arbeitsmedium (A) nach Durchströmung des Wärmetauschers (4) eine dritte Temperatur (T₃) aufweist,
- eine Expansionsvorrichtung (5) zur Expansion des Arbeitsmediums (A) auf den unteren Prozessdruck (pᵤ) und auf eine vierte Temperatur (T₄), wobei der Expansionsvorrichtung eine mechanische Arbeit entnehmbar ist, und
- einen Kondensator (6) zur Kondensation des Arbeitsmediums (A), so dass das Arbeitsmedium (A) nach Durchströmung des Kondensator zumindest annähernd die erste Temperatur (T₁) aufweist,
wobei die Fördereinheit (3), der Wärmetauscher (4), die Expansionsvorrichtung (5) und der Kondensator (6) in einem Kreislauf verschaltet sind,
wobei
- Mittel zur Regelung des oberen Prozessdruckes (pₒ) durch Anpassung einer Förderleistung der Fördereinheit (3) in Abhängigkeit von einem Betriebszustand der Verbrennungskraftmaschine (2) vorgesehen sind, **dadurch gekennzeichnet, dass**
- Mittel zur Regelung des unteren Prozessdruckes (pᵤ) in Abhängigkeit von einem Betriebszustand der Verbrennungskraftmaschine (2) vorgesehen sind, wobei die Mittel zur Regelung des unteren Prozessdruckes (pᵤ) eine zweite Steuereinheit (8) umfassen, mit deren Hilfe eine Last der Expansionsvorrichtung (5) gemäß einer Sollvorgabe einstellbar ist.

7. Verbrennungskraftmaschine (2) nach Anspruch 6,
**dadurch gekennzeichnet, dass**
der obere Prozessdruck (pₒ) in Abhängigkeit von einem Sollwert für den unteren Prozessdruck (pᵤ) und in Abhängigkeit von der dritten Temperatur (T₃) des Arbeitsmediums (A) stromabwärts des Wärmetauschers (4) einstellbar ist.

8. Verbrennungskraftmaschine (2) nach einem der Ansprüche 6 oder 7,
**dadurch gekennzeichnet, dass**
die Mittel zur Regelung des oberen Prozessdruckes (pₒ) eine erste Steuereinheit (7) und Sensoren zur Erfassung eines Betriebszustandes der Verbrennungskraftmaschine (7) umfassen.

9. Verbrennungskraftmaschine (2) nach Anspruch 8,
**dadurch gekennzeichnet, dass**
über die erste Steuereinheit (7) ein Massenstrom des Arbeitsmediums mit Hilfe der Fördereinheit (3) in Abhängigkeit von Messgrößen der Sensoren zur Erfassung des Betriebszustands einstellbar ist.

10. Verbrennungskraftmaschine (2) nach einem der Ansprüche 8 oder 9,
**dadurch gekennzeichnet, dass**
ein Sensor als Temperatursensor (7.1) zur Erfassung der dritten Temperatur (T₃) des Arbeitsmediums (A) stromabwärts des Wärmetauschers (4) ausgeführt ist und/oder ein Sensor als Drucksensor (7.2) zur Erfassung des oberen Prozessdruckes (pₒ) des Arbeitsmediums (A) ausgeführt ist.

11. Verbrennungskraftmaschine (2) nach Anspruch 10,
**dadurch gekennzeichnet, dass**
der Drucksensor (7.2) stromabwärts des Wärmetauschers (4) angeordnet ist.

12. Verbrennungskraftmaschine (2) nach einem der Ansprüche 6 bis 11,
**dadurch gekennzeichnet, dass**
die Expansionsvorrichtung (5) mit einem Generator und/oder einem elektrischen Motor und/oder einer Motor/Generatoreinheit (9) gekoppelt ist wobei mittels des Generators und/oder des elektrischen Motors und/oder der Motor/Generatoreinheit (9) eine Last der Expansionsvorrichtung (5) einstellbar ist.

## Claims

1. Method for recovering heat dissipated by an internal combustion engine (2), comprising the following working steps:
- the compression of a liquid working medium (A) by means of a conveying unit (3) from a lower process pressure (pᵤ) and a first temperature (T₁) to an upper process pressure (pₒ) and a second temperature (T₂);
- the evaporation of the working medium in a heat exchanger (4) by heat transfer of a heat medium containing heat dissipated by the internal combustion engine (2) to the working medium (A), wherein the working medium (A) has a third temperature (T₃) after flowing through the heat exchanger (4);
- the expansion of the working medium (A) at least approximately to the lower process pressure (pᵤ) and to a fourth temperature (T₄) in an expansion apparatus (5), wherein a mechanical work can be extracted from the expansion apparatus;
- the condensation of the working medium (A) in a condenser (6); and
- the transfer of the working medium (A) to the conveying unit (3),
wherein
- the upper process pressure (pₒ) is adjusted in an operating range of the internal combustion engine (2) in such a way that the working medium (A) is expanded in the expansion apparatus (5) at least approximately to a saturated steam limit (SG),
**characterised in that**
- the lower process pressure (pᵤ) is adjusted within a presettable pressure range in a regulation by means of a second control unit (8) on the basis of an adjustment of a load of the expansion apparatus (5) in accordance with a nominal value in an operating range of the internal combustion engine (2).

2. Method according to claim 1,
**characterised in that**
the upper process pressure (pₒ) is adjusted by adapting a delivery rate of the conveying device (3) in an operating range of the internal combustion engine (2).

3. Method according to claim 1 or 2,
**characterised in that**
the working medium (A) is expanded in the expansion apparatus (5) to a wet steam range (NG) in an operating range of the internal combustion engine (2).

4. Method according to any of claims 1 to 3,
**characterised in that**
the mass flow of the working medium (A) is controlled in a closed and/or open loop by means of the expansion apparatus (5).

5. Method according to claim 4,
**characterised in that**
the mass flow of the working medium is adjusted by the closed- and/or open-loop control of a power of the expansion apparatus (5).

6. Internal combustion engine (2) with a heat recovery device (1), comprising
- a conveying unit (3) for compressing an at least largely liquid working medium (A) from a lower process pressure (pᵤ) and a first temperature (T₁) to an upper process pressure (pₒ) and a second temperature (T₂),
- a heat exchanger (4) for evaporating the working medium (A) by heat transfer of a heat medium (M) to the working medium (A), so that the working medium (A) has a third temperature (T₃) after flowing through the heat exchanger (4),
- an expansion apparatus (5) for expanding the working medium (A) to the lower process pressure (pᵤ) and to a fourth temperature (T₄), wherein a mechanical work can be extracted from the expansion apparatus, and
- a condenser (6) for condensing the working medium (A), so that the working medium (A) has at least approximately the first temperature (T₁) after flowing through the condenser,
wherein the conveying unit (3), the heat exchanger (4), the expansion apparatus (5) and the condenser (6) are interconnected in a circuit,
- wherein means are provided for regulating the upper process pressure (pₒ) by adapting a delivery rate of the conveying device (3) as a function of an operating state of the internal combustion engine (2), **characterised in that**
- means are provided for regulating the lower process pressure (pᵤ) as a function of an operating state of the internal combustion engine (2), wherein the means for regulating the lower process pressure (pᵤ) comprise a second control unit (8), by means of which a load of the expansion apparatus (5) can be adjusted in accordance with a nominal value.

7. Internal combustion engine (2) according to claim 6,
**characterised in that**
the upper process pressure (pₒ) is adjustable as a function of a set value for the lower process pressure (pᵤ) and as a function of the third temperature (T₃) of the working medium (A) downstream of the heat exchanger (4).

8. Internal combustion engine (2) according to claim 6 or 7,
**characterised in that**
the means for regulating the upper process pressure (pₒ) comprise a first control unit (7) and sensors for the detection of an operating state of the internal combustion engine (2).

9. Internal combustion engine (2) according to claim 8,
**characterised in that**
by way of the first control unit (7) a mass flow of the working medium can be adjusted with the aid of the conveying unit (3) as a function of measured variables of the sensors for the detection of the operating state.

10. Internal combustion engine (2) according to claim 8 or 9,
**characterised in that**
one sensor is designed as a temperature sensor (7.1) for detecting the third temperature (T₃) of the working medium (A) downstream of the heat exchanger (4) and/or one sensor is designed as a pressure sensor (7.2) for detecting the upper process pressure (pₒ) of the working medium (A).

11. Internal combustion engine (2) according to claim 10,
**characterised in that**
the pressure sensor (7.2) is located downstream of the heat exchanger (4).

12. Internal combustion engine (2) according to any of claims 6 to 11, **characterised in that**
the expansion apparatus (5) is coupled to a generator and/or to an electric motor and/or to a motor/generator set (9), wherein a load of the expansion apparatus (5) can be adjusted by means of the generator and/or the electric motor and/or the motor/generator set (9).

## Revendications

1. Procédé de récupération d'une chaleur perdue d'un moteur à combustion interne (2), comprenant les étapes de travail suivantes :
- compression d'un fluide de travail (A) au moyen d'une unité de transport (3) d'une pression de processus inférieure (Pᵤ) et à une première température (T₁) à une pression de processus supérieure (pₒ) et à une deuxième température (T₂) ;
- vaporisation du fluide de travail dans un échangeur de chaleur (4) par transfert thermique d'un caloporteur contenant une chaleur perdue du moteur à combustion interne (2) sur le fluide de travail (A), le fluide de travail (A) présentant après son écoulement à travers l'échangeur de chaleur (4), une troisième température (T₃) ;
- expansion du fluide de travail (A) au moins approximativement à la pression de processus inférieure (pᵤ) et à une quatrième température (T₄) dans un dispositif d'expansion (5), un travail mécanique pouvant être extrait du dispositif d'expansion ;
- condensation du fluide de travail (A) dans un condenseur (6) et
- acheminement du fluide de travail (A) vers l'unité de transport (3),
- la pression de processus supérieure (pₒ) étant réglée dans une zone de fonctionnement du moteur à combustion interne (2) de manière à ce que le fluide de travail (A) soit expansé dans le dispositif d'expansion (5) au moins approximativement jusqu'à une limite de vapeur saturée (SG), **caractérisé en ce que**
- la pression de processus inférieure (pᵤ) étant réglée dans un régulateur au moyen d'une seconde unité de commande (8) à l'aide d'un réglage d'une charge du dispositif d'expansion (5) conformément à une consigne théorique dans une zone de fonctionnement du moteur à combustion interne (2) dans une plage de pression prédéfinie.

2. Procédé selon la revendication 1, **caractérisé en ce que** la pression de processus supérieure (pₒ) est réglée par l'adaptation d'une puissance de transport de l'unité de transport (3) dans une plage de fonctionnement du moteur à combustion interne (2).

3. Procédé selon la revendication 1 ou 2, **caractérisé en ce que** le fluide de travail (A) dans le dispositif d'expansion (5) est expansé dans une plage de fonctionnement du moteur à combustion interne (2) jusque dans une plage de vapeur humide (NG).

4. Procédé selon l'une quelconque des revendications 1 à 3, **caractérisé en ce que** un flux massique du fluide de travail (A) est régulé et/ou commandé au moyen du dispositif d'expansion (5).

5. Procédé selon la revendication 4, **caractérisé en ce qu'**un flux massique du fluide de travail est réglé par régulation et/ou commande d'une puissance du dispositif d'expansion (5).

6. Moteur à combustion interne (2) comprenant un dispositif de récupération de la chaleur (1), comprenant
- une unité de transport (3) destiné à comprimer un fluide de travail (A) au moins en grande partie liquide d'une pression inférieure de processus (pᵤ) et à une première température (T₁) à une pression supérieure de processus (pₒ) et à une deuxième température (T₂).
- un échangeur de chaleur (4) destiné à vaporiser le fluide travail (A) par un transfert thermique d'un milieu de chaleur (M) à un fluide de travail (A) de manière à ce que le fluide de travail (A) présente après l'écoulement à travers l'échangeur de chaleur (4) une troisième température (T₃),
- un dispositif d'expansion (5) destiné à l'expansion du fluide de travail (A) à la pression inférieure de processus (pᵤ) et à une quatrième température (T₄), un travail mécanique pouvant être extrait du dispositif d'expansion, et
- un condensateur (6) destiné à la condensation du fluide de travail (A) de manière à ce que le fluide de travail (A) après écoulement dans le condensateur présente au moins approximativement la première température (T₁),
l'unité de transport (3), l'échangeur de chaleur (4), le dispositif d'expansion (5) et le condensateur (6) étant raccordés dans un circuit,
- des moyens étant utilisés pour la régulation de la pression supérieure de processus (pₒ) par adaptation d'une puissance de transport de l'unité de transport (3) en fonction d'un état de fonctionnement du moteur à combustion interne (2), **caractérisé en ce que**
- des moyens sont utilisés pour la régulation de la pression inférieure de processus (pᵤ) en fonction d'un état de fonctionnement du moteur à combustion interne (2),
les moyens de régulation de la pression inférieure de processus (pᵤ) comprenant une seconde unité de commande (8) qui peut régler une charge du dispositif d'expansion (5) selon une consigne théorique.

7. Moteur à combustion interne (2) selon la revendication 6, **caractérisé en ce que** la pression supérieure de processus (pₒ) en fonction d'une valeur théorique pour la pression inférieure de processus (pᵤ) et en fonction de la troisième température (T₃) du fluide de travail peut être réglée en aval de l'échangeur de chaleur (4).

8. Moteur à combustion interne (2) selon l'une quelconque des revendications 6 ou 7, **caractérisé en ce que** les moyens de régulation de la pression supérieure de processus (pₒ) comprennent une première unité de commande (7) et des capteurs de détection d'un état de fonctionnement du moteur à combustion interne (7).

9. Moteur à combustion interne (2) selon la revendication 8, **caractérisé en ce que** l'unité de commande permet de régler un flux massique du fluide de travail au moyen de l'unité de transport (3) en fonction des grandeurs de mesure des capteurs servant à détecter l'état de fonctionnement.

10. Moteur à combustion interne (2) selon l'une des revendications 8 ou 9, **caractérisé en ce qu'**un capteur est conçu sous la forme de sonde de température (7.1) pour détecter la troisième température (T₃) du fluide de travail (A) en aval de l'échangeur de chaleur (4) et/ou un capteur sous forme de capteur de pression (7.2) servant à détecter la pression supérieure de processus (pₒ) du fluide de travail (A).

11. Moteur à combustion interne (2) selon la revendication 10, **caractérisé en ce que** le capteur de pression (7.2) est disposé en aval de l'échangeur de chaleur (4).

12. Moteur à combustion interne (2) selon l'une quelconque des revendications 6 à 11, **caractérisé en ce que** le dispositif d'expansion (5) est couplé à un générateur et/ou à un moteur électrique et/ou à un moteur/unité génératrice (9), au moyen du générateur et/ou du moteur électrique et/ou du moteur/unité génératrice (9) une charge du dispositif d'expansion (5) peut être réglée.
